Europäisches Patentamt
European Patent Office
Office européen des brevets

(11) Publication number: 0 148 632
A2

# EUROPEAN PATENT APPLICATION

(21) Application number: 84309047.3

(22) Date of filing: 21.12.84

(51) Int. Cl.[4]: C 08 F 8/44, C 08 F 255/02, C 08 F 210/02

(30) Priority: 22.12.83 US 564644

(43) Date of publication of application: 17.07.85 Bulletin 85/29

(84) Designated Contracting States: BE CH DE FR GB IT LI LU NL SE

(71) Applicant: E.I. DU PONT DE NEMOURS AND COMPANY, 1007 Market Street, Wilmington Delaware 19898 (US)

(72) Inventor: Saltman, Robert Philip, 49 Weeks Drive, Boothwyn Pennsylvania 19061 (US)

(74) Representative: Jones, Alan John et al, CARPMAELS & RANSFORD 43 Bloomsbury Square, London, WC1A 2RA (GB)

(54) **Ionomers with improved low temperature flex-crack resistance and improved process economics.**

(57) Improved low temperature flex-crack resistant ionic copolymers of ethylene, unsaturated carboxylic acid and at least one softening comonomer that is capable of forming a homopolymer having a glass transition temperature of less than —40°C, such as alkyl acrylates and/or alkyl vinyl ethers and from about 0.5 to about 6.0 mole % of chain branches arising from the polymerization of ethylene, are obtained by direct or graft copolymerization, followed by neutralization of the carboxylic acid groups with metal ions, such ionic copolymers of ethylene being characterized by having from about 5 to about 20 chain branches arising from the polymerization of ethylene/1000 $CH_2$ units of the polymer backbone, said ethylene chain branches being composed of butyl or longer branches, the copolymer being further characterized by satisfying the equation $A + 2.05\,B = C$, wherein A is the mole percent of softening comonomer, B is the mole percent of butyl or longer chain branches derived from the polymerization of ethylene, and C is from about 1.5 to about 24.3.

0148632

## TITLE

# IONOMERS WITH IMPROVED LOW TEMPERATURE FLEX-CRACK RESISTANCE AND IMPROVED PROCESS ECONOMICS

## BACKGROUND OF THE INVENTION

### FIELD OF THE INVENTION

This invention relates to ionomers and more particularly it relates to ionomers with improved low temperature flex-crack resistance.

### DESCRIPTION OF THE PRIOR ART

Copolymers of ethylene and acrylic or methacrylic acids partially neutralized with metal ions such as sodium or zinc ions (ethylene ionomers) are well-known and are tough molding resins with a combination of good tensile properties and excellent abrasion resistance. Their deficiency is that at low temperatures they have poor flex-crack resistance.

U.S. Patent 3,264,272 discloses ethylene/methacrylic acid/acrylic ester copolymers and ionomers produced from these materials. Polymerization at high pressures of 50 to 3000 atmospheres and elevated temperatures of 150 to 300°C in the presence of a free-radical polymerization initiator is disclosed.

German OLS 2341462 discloses ionic terpolymers of (a) α-olefins of the formula $R-CH=CH_2$ where R is a radical selected from hydrogen and alkyl radicals of 1 to 8 carbon atoms; (b) α,ß-ethylenically unsaturated carboxylic acids of 3 to 8 carbon atoms, and (c) alkyl esters of α,ß-ethylenically unsaturated carboxylic acids of 3 to 8 carbon atoms where the alkyl radical has at least 4 carbon atoms, wherein the concentration of (a) is at least 50 mole percent of the terpolymer, the concentration of (b) is 0.2 to 25 mole percent of the terpolymer and the concentration of (c) is 0.2 to

25 mole percent of the terpolymer, said terpolymers having from 10 percent to 90 percent of the carboxylic acid groups ionized by neutralization with metal ions having an ionized valence of from one to three inclusive when (a) is a monocarboxylic acid and an ionized valence of one when (b) is a dicarboxylic acid, said metal ions being selected from the group consisting of uncomplexed and complexed metal ions. Films, molded articles, golf ball covers formed from the ionic terpolymers as well as substrates coated with said terpolymers are disclosed.

Copending application No. 83307918.9 (Publication No. 0 115 190) discloses ionomers of ethylene, unsaturated carboxylic acid and softening comonomer having improved low temperature properties, wherein the softening comonomers are alkyl acrylates and/or alkyl vinyl ethers that form a homopolymer that has a low glass transition temperature, the polymerization being carried out at a temperature of from about 100 to about 200°C followed by neutralization of the carboxylic acid groups with metal ions, the ionomers being characterized by a low level of chain branching.

## SUMMARY OF THE INVENTION

According to the present invention there is provided an improved low temperature flex-crack resistant ionic copolymer of ethylene, unsaturated carboxylic acid and at least one softening comonomer, said softening comonomers being capable of forming a homopolymer that has glass transition temperature of less than -40°C, said ionic copolymer of ethylene being characterized by having chain branches arising from the polymerization of ethylene, said branches being composed of butyl or longer branches the unsaturated carboxylic acid is selected from the group consisting of α,ß-ethylenically unsaturated

mono- and dicarboxylic acids of 3-8 carbon atoms, half esters of said dicarboxylic acids and anhydrides of said dicarboxylic acids, said copolymer containing from about 70 to about 98.7 mole % of ethylene, from about 0.35 to about 12 mole % of unsaturated carboxylic acid, from about 0.45 to about 12 mole % of softening comonomer, and from about 0.5 to about 6 mole % of chain branches arising from the polymerization ethylene, said branches being composed of butyl or longer branches, said ionic copolymer of ethylene being characterized by having from about 5 to about 20 chain branches arising from the polymerization of ethylene per 1000 $CH_2$ (methylene) units of the polymer backbone, said chain branches being composed of butyl or longer branches, and said copolymer being further characterized by satisfying the equation $A + 2.05B = C$, wherein A is the mole % of softening comonomer, B is the mole % of butyl or longer chain branches arising from the polymerization of ethylene and C is from about 1.5 to about 24.3, said copolymer having from about 3 to about 90% of the carboxylic acid groups ionized by neutralization with metal ion selected from groups Ia, Ib, IIa, IIb, IIIa, IVa, VIb and VIII of the Periodic Table of Elements, said ionic copolymer of ethylene optionally containing from 0 to about 10 wt. %, of mold release or slip agent selected from the group consisting of compounds having the following formulae:

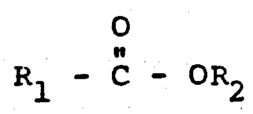 ; 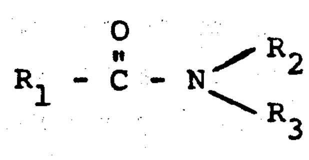 ;

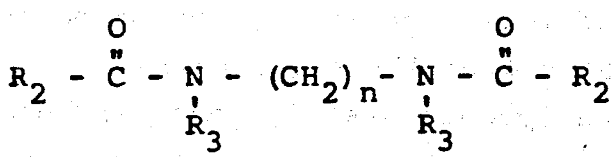 <u>bis</u> <u>amide</u> ;

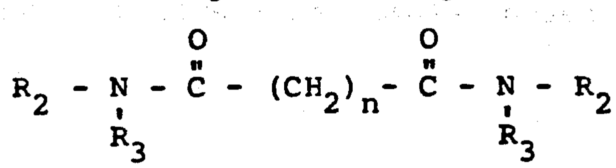 <u>di</u> <u>amide</u> ;

0148632

where: $R_1$ = 3-24 carbon alkyl group
$R_2$ = 1-24 carbon alkyl group or H
$R_3$ = 1-4 carbon alkyl group or H
n = 2-8

Further according to the present invention there is provided an improved process of preparing ionic copolymers of ethylene having improved low temperature flex-crack resistance, said process being selected from the group consisting of direct copolymerization and graft copolymerization wherein

(A) said direct copolymerization comprises polymerizing ethylene, unsaturated carboxylic acid and at least one comonomer in the presence of free radical polymerization initiator at elevated temperatures followed by neutralization of the carboxylic acid groups of the resultant direct copolymer with metal ions, and

(B) said graft copolymerization comprises polymerizing ethylene and at least one comonomer in the presence of free radical polymerization initiator at elevated temperatures and grafting unsaturated carboxylic acid or anhydride onto the ethylene/comonomer polymer backbone followed by neutralization of the carboxylic acid groups of the resultant graft copolymer with metal ions,

the improvement comprising selecting said comonomer from the group consisting of softening comonomers that are characterized by being copolymerizable with ethylene and being capable of forming a homopolymer that has a glass transition temperature of less than -40°C, and selecting the unsaturated acid from the group consisting of α,ß-ethylenically unsaturated, mono- and dicarboxylic acids of 3-8 carbon atoms, half esters of said

dicarboxylic acids and anhydrides of said dicarboxylic acids, said copolymer containing from about 70 to about 98.7 mole % of ethylene, from about 0.35 to about 12 mole % of unsaturated carboxylic acid, and from about 0.45 to about 12 mole % of softening comonomer, and from about 0.5 to about 6 mole % of chain branches arising from the polymerization of ethylene, said branches being composed of butyl or longer branches, the polymerization temperature being from about 205 to about 300°C, adjusting the amount of softening comonomer and the polymerization temperature to satisfy the equation A+2.05B = C, wherein A is the mole % of softening comonomer, B is the mole % of butyl or longer chain branches arising from the polymerization of ethylene and C is from about 1.5 to about 24.3, and to further satisfy the requirement that the chain branches arising from the polymerization of ethylene is present in an amount of from about 5 to about 20 chain branches per 1000 $CH_2$ (methylene) units of the polymer backbone from about 3 to about 90% of the carboxylic acid groups of the copolymer being neutralized with metal ions selected from groups Ia, Ib, IIa, IIb, IIIa, IVa, VIb and VIII of the Periodic Table.

Still further according to the present invention there are provided thermoplastic blends of the improved ionomers with various materials such as nylon, polypropylene, propylene-ethylene copolymer, etc., as well as golf balls having similar click and feel as a golf ball made with balata cover comprising a core and a cover, wherein the cover comprises the ionic copolymer of the present invention, and ski boots made with the ionomers of the present invention.

DETAILED DESCRIPTION OF THE INVENTION

Surprisingly it was found that ionomers with improved low temperature mechanical properties can be prepared at higher and thus more economically attractive temperatures, and at lower levels of softening comonomers (as low as 0.45 mole % or about 2% by weight) as compared with the teaching of copending application No. 83307918.9.

This extends the useful range of these materials from the very low modulus resins (about 3-8 kpsi) described in said copending application to higher modulus (about 25-50 kpsi) materials with surprisingly good low temperature mechanical properties (cf. Example 4). A further surprising result which is in contrast to the previous work is the superior low temperature mechanical properties achieved at higher levels of branching. The branching limitation in said copending application limits the practical upper reactor temperature for a high pressure (~27kpsi) constant environment stirred autoclave. The present invention provides for ionomers produced at higher reactor temperatures while also having superior low temperature mechanical properties. However, to achieve the same degree of superior low temperature mechanical properties, compositions must be produced by obeying the "summation rule" described below.

The present invention makes possible the synthesis of partially neutralized ethylenically based terionomers having improved low temperature mechanical properties over an extended range of reactor conditions. High conversion rates (high temperatures) may be used without sacrificing low temperature mechanical properties, thereby substantially improving the process economics.

Since the ionomers of this invention have superior low temperature properties and lower hardness compared to commercially available ionomers, they could perform as a replacement for balata rubber in golf ball covers. Accordingly, golf balls comprising a core and a cover, wherein the cover comprises the ionic copolymer of the present invention would have similar click and feel as golf balls made with balata covers. The ionomers of the present invention, can also be used for ski boots, impact modifiers in combination with other thermoplastic or thermoset materials, cart wheels, hockey skates, fabric coatings, miscellaneous sporting equipment where impact strength is important, such as protective head gear in football, cycling, or horse back riding. They may also be used as adhesive or heat seal layer in difficult-to-adhere substrates such as polypropylene and polyvinylidene chloride. Additionally, it makes an excellent matrix for foamed articles such as shoe soles and for a variety of filling agents such as silicates, calcium carbonate, barium sulphate, alumina etc.

The polymer of the present invention is a copolymer of ethylene, unsaturated carboxylic acid, at least one softening comonomer that is copolymerizable with ethylene and is capable of forming a homopolymer having a glass transition temperature of less than -40°C, and chain branches arising from the polymerization of ethylene, said branches being composed of butyl or longer branches, said copolymer being partially neutralized with a metal ion.

The unsaturated acid is selected from the group consisting of α,ß-ethylenically unsaturated mono- and dicarboxylic acids of 3-8 carbon atoms, half esters of said dicarboxylic acids and anhydrides

of said dicarboxylic acids. Thus the unsaturated carboxylic acid can be acrylic acid, methacrylic acid, maleic acid, fumaric acid, itaconic acid and half esters of maleic, fumaric and itaconic acids. The preferred acids are methacrylic acid and acrylic acid and the most preferred acid is acrylic acid.

The softening comonomer can be an alkyl acrylate, alkyl vinyl ether, vinyl ester or vinyl siloxane. The alkyl acrylate can be e.g., n-butyl, n-hexyl, n-heptyl, n-octyl, 2-octyl, 2-ethoxyethyl, 2-ethoxypropyl, 2-ethylbutyl, 2-ethylhexyl, 4-thiapentyl, 3-methylbutyl, 3-methoxybutyl, 2-methoxyethyl, and 3-methoxypropyl acrylate. The alkyl vinyl ether can be e.g. ethyl, n-propyl, n-butyl, 2-ethylhexyl, n-hexyl, n-octyl and n-pentyl vinyl ether.

The preferred alkyl acrylates and alkyl vinyl ethers are those which give homopolymers having a glass transition temperature of less than -45°C. Such alkyl acrylates are for example 2-ethoxyethyl, 2-ethylhexyl, 2-ethylbutyl, 2-methoxyethyl, 3-ethoxypropyl, 3-methoxybutyl, 3-methoxypropyl, 4-thiapentyl, n-butyl, n-hexyl, n-heptyl and n-octyl acrylate. Examples of preferred alkyl vinyl ethers having a Tg less than -45°C are n-propyl, n-butyl, 2-ethylhexyl, n-hexyl, n-octyl and n-pentyl vinyl ether.

Most preferred alkyl acrylates and alkyl vinyl ethers are those that form homopolymers with $T_g$ of less than -50°C. Illustrative examples of these are n-butyl, 3-ethoxypropyl, n-hexyl, n-heptyl, n-octyl, 3-methoxybutyl, 3-methoxypropyl and 4-thiapentyl acrylate, and n-butyl, n-hexyl, n-octyl and n-pentyl vinyl ether.

The ionic copolymers of ethylene of the present invention contain from about 70 to about 98.7 mole % of ethylene, from about 0.35 to about 12 mole % of unsaturated carboxylic acid, from about 0.45 to about 12 mole % of softening comonomer and from about 0.5 to about 6 mole % of chain branches arising from the polymerization of ethylene, said branches being composed of butyl or longer branches and said ionic copolymer of ethylene is characterized by having from about 5 to about 20 chain branches arising from the polymerization of ethylene/1000 $CH_2$ units of the polymer backbone.

Preferably the ionic copolymers of the present invention contain from about 77 to about 97.5 mole % ethylene, from about 1 to about 9.5 mole % unsaturated carboxylic acid, from about 0.75 to about 9.0 mole % softening comonomer, and from about 0.75 to about 4.5 mole % of chain branches arising from the polymerization of ethylene, and said ionic copolymer of ethylene is characterized by having from about 6 to about 16 chain branches arising from the polymerization of ethylene/1000 $CH_2$ units of the polymer backbone.

Most preferably the ionic copolymers of ethylene of the present invention contain from about 81 to about 95.8 mole % of ethylene, from about 2.0 to about 9.0 mole % of unsaturated carboxylic acid, from about 1.2 to about 7 mole % of softening comonomer, and from about 1 to about 3 mole % of chain branches arising from the polymerization of ethylene and said ionic copolymer of ethylene is characterized by having from about 7 to about 12 chain branches arising from the polymerization of ethylene/1000 $CH_2$ units of the polymer backbone.

The level of chain branching is determined by C-13 NMR.

The copolymer of the present invention has from about 3 to about 90% of the carboxylic acid groups ionized by neutralization with metal ions selected from groups Ia, Ib, IIa, IIb, IIIa, IVa, VIb and VIII of the Periodic Table of the Elements, such as sodium, potassium, zinc, calcium, magnesium, lithium, aluminum, nickel, and chromium. Preferably the copolymer has from about 5 to about 80% of the carboxylic acid groups ionized by neutralization with metal ions. Most preferably the copolymer has from about 20 to about 70% of the carboxylic acid groups ionized by neutralization with metal ions selected from the group consisting of sodium, potassium, zinc, calcium and magnesium, aluminum and chromium.

Increased ethylene branching, which occurs as reactor temperature increases, normally leads to diminished mechanical performance. This effect can be countered and superior low temperature mechanical performance achieved at elevated reactor temperatures by reducing the amount of softening comonomer in the ionomer as ethylene branching (reactor temperature) increases. This effect can be quantified by use of the following "summation rule":

$$A + 2.05\,B = C$$

where A = mole % of softening comonomer,

B = mole % of ethylene branches,

C = a branching index [representing the sum of the softening comonomer and ethylene branches] required to achieve the desired degree of low temperature mechanical performance at one particular reactor temperature. For the present invention, the value of C should be from about 1.5 to about 24.3.

The value of C in the summation rule should preferably be from about 2.3 to about 18.2 and most preferably it should be from about 3.2 to about 13.2.

The ionic copolymers of the present invention can be prepared by direct or graft copolymerization. The direct copolymerization process comprises polymerizing ethylene, unsaturated carboxylic acid and softening comonomer in the presence of free radical polymerization initiator at elevated temperatures of from about 205 to about 300°C, preferably from about 215 to about 270°C and most preferably from about 225 to about 255°C at high pressures, e.g., from about $6.9 \times 10^7$ to about $3.8 \times 10^8$ mPa (10-55kpsi), preferably from about $1.0 \times 10^8$ to about $3.1 \times 10^8$ mPa (15-45kpsi) and most preferably from about $1.7 \times 10^8$ to about $2.4 \times 10^8$ mPa (24-35kpsi) followed by neutralization of the carboxylic acid groups of the resultant direct copolymer with metal ions. A suitable polymerization process is discussed in detail in U.S. 3,264,272 the disclosure of which patent is hereby incorporated by reference.

The graft copolymerization process can be carried out by polymerizing ethylene and softening copolymer in the presence of free radical polymerization initiator at elevated temperatures and pressures as indicated above and grafting unsaturated carboxylic acid or anhydride onto the ethylene/softening comonomer polymer backbone followed by neutralization of the carboxylic acid groups of the resultant graft copolymer with metal ions.

The polymerization reaction can be carried out in a constant environment stirred autoclave or in a tubular reactor. The unsaturated carboxylic acid,

or anhydride can be grafted on following copolymerization of ethylene with the softening comonomer. This grafting step can also be carried out in an extruder.

A particularly preferred embodiment of the present invention is when the ionic copolymer of ethylene contains from about 1.2 to about 7.0 mole % of softening comonomer with $T_g$ of less than -50°C such as n-butyl, n-hexyl, 3-methoxypropyl or 3-methoxybutyl acrylate or n-butyl or n-hexyl vinyl ether from about 2.0 to about 9.0 mole % of acrylic acid and from about 1 to about 3 mole % branches arising from the polymerization of ethylene, where the level of chain branches arising from the polymerization of ethylene is from about 7 to about 12 butyl or longer branches/1000 backbone methylene units, and also obeys the "summation rule": (A+2.05B) = C wherein C is from about 3.2 to about 13.2.

Such copolymers possess unexpectedly high abrasion resistance (see Examples 2A and 2B).

Additionally, the ionic copolymers of the present invention may contain any of a number of mold release or slip agents having the formulae below. These long-chain fatty acid amides include carboxylic acids, their esters, amides or salts where the combined alkyl portion ranges from 4-52 carbons, and the bis- or di-amides or esters of the same, where the alkyl portion ranges from 4-64 carbons, such as stearamide, stearylerucamide, stearyl stearamide, N,N'-ethylene bis-oleamide, N,N'-ethylene bis-stearamide or oleayl palmitamide. The level of additive can range from 0 to about 10 wt. %.

The mold release or slip agents can have the following formulae:

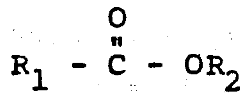 ; 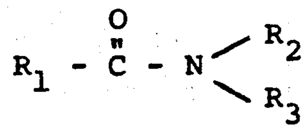 ;

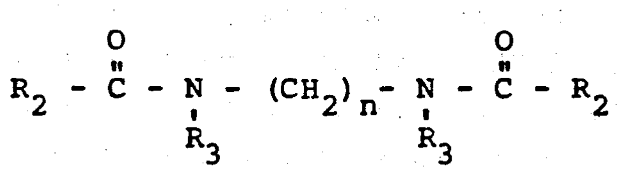 bis amide ;

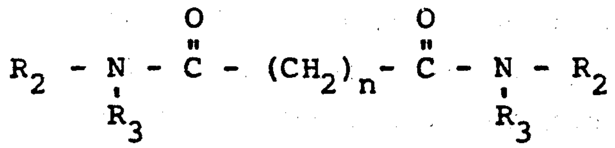 di amide ;

where: $R_1$ = 3-24 carbon alkyl group
$R_2$ = 1-24 carbon alkyl group or H
$R_3$ = 1-4 carbon alkyl group or H
n = 2-8

The following examples serve to illustrate the present invention. All parts, percentages and proportions are by weight unless otherwise indicated.

Example 1 and Comparative Example 1

The polymer of Comparative Example 1, containing normal butylacrylate (nBA), ethylene and methacrylic acid (MAA), was produced by free radical polymerization carried out at a reactor temperature of 160°C and $1.86 \times 10^8$ Pa (27,000 psi). Monomer addition was adjusted to give a polymer containing 16.7% by weight of n-butylacrylate (nBA), 9.0% of methacrylic acid (MAA) and 74.3% of ethylene. Polymer base resins were converted to sodium ionomer by mixing, for example, 3.74 Kg of polymer with 260 g of sodium carbonate concentrate (50% $Na_2CO_3 \cdot H_2O$ in an E/11% MAA copolymer with a melt flow of 100 g/10 min). Several ionomerization reactions were carried out on these polymer base resins in a twin screw extruder. The ionomers were combined into one large batch and re-extruded to obtain a homogeneous blend.

The polymer of Example 1 was synthesized at 230°C and 186 MPa (27,000 psi). Monomer addition was adjusted to give a polymer containing 10.0% by weight nBA, 8.2% MAA and 81.8% ethylene. The polymer base resin was converted to sodium ionomer in a twin screw extruder using a similar extrusion procedure to the one used in Comparative Example 1. However, in this case 1000 g of polymer was mixed with 64.0 g of the sodium carbonate concentrate above. The following extrusion conditions are typical conditions used to carry out the conversion of polymer base resins to sodium ionomers:

Extrusion Conditions

| Screw Speed | Temperatures, °C, Zones | | | | | Rate | Vacuum | $H_2O$ Feed |
|---|---|---|---|---|---|---|---|---|
| rpm | 1 | 2 | 3 | 4 | 5 | lb/hr | in/Hg | cc/hr |
| 50 | 140 | 220 | 255 | 255 | 220 | 4 | 28 | 75 |

These polymers illustrate the summation rule referred to earlier. This rule is used to calculate a branching index, C, representing the sum of the softening comonomer (nBA) and ethylene branches, required to result in the same degree of low temperature mechanical performance of polymers synthesized at the particular reactor temperature. According to the summation rule the low temperature mechanical properties are determined by summing the mole percent of softening comonomer, e.g., nBA, with 2.05 times the mole percent of branches arising from ethylene polymerization. Equivalent low temperature mechanical properties are achieved for polymers with comparable branching indices, C, despite the differences in their synthesis temperatures. Thus, despite substantial differences in the amount of softening comonomer between polymers synthesized at widely different reactor temperatures, use of the summation rule provides equivalent low temperature

mechanical properties. Use of the summation rule assumes that other compositional variables, e.g., mole % MAA, be held constant while the softening comonomer and degree of branching are varied. Tables I and II illustrate the summation rule and equivalence of properties.

Example 2 and Comparative Example 2

Polymers were synthesized at 160°C and 235°C reactor temperatures at 186 MPa (27 kpsi). The compositions were 76.9% by weight of ethylene, 8.6% of MAA, 14.5% of nBA (Ex. C-2) and 85.8% by weight of ethylene, 6.5% of AA, 7.7% of nBA (Ex. 2), respectively. These polymers were subsequently converted to sodium ionomers by reaction with a sodium carbonate concentrate in a twin screw extruder as described in Example 1. For example, (E/6.5 AA/7.7 nBA) was prepared by reacting 1000 g of base resin with 27.58 g of sodium carbonate concentrate. Two different neutralization levels were prepared for each composition.

Table III summarizes the compositions and illustrates the use of the "summation rule". Table IV gives the physical properties. The four examples in Table IV illustrate the outstanding abrasion resistance achieved with acrylic acid containing ionomers relative to those containing methacrylic acid. This difference in abrasion resistance is even more striking when polymers are compared that were synthesized at the same reactor temperature (see Example 3).

TABLE I

| Example No. | Polymer Composition Weight % MAA | nBA | Mole % MAA | nBA (A) | (B)* | Total No. Branches Per 1000 $CH_2$'s** | Branching Index C |
|---|---|---|---|---|---|---|---|
| C-1 | 9.0 | 16.7 | 3.62 | 4.52 | .789 | 3.95 | 6.14 |
| 1 | 8.2 | 10 | 3.08 | 2.52 | 1.78 | 8.89 | 6.17 |

*Assuming average molecular weight of branches = 84

**This refers to the total number of chain branches arising from the polymerization of ethylene per 1000 $CH_2$ units of the polymer backbone. The number of chain branches were determined by C-13 NMR measurements on 18 different polymer samples synthesized at reactor temperatures ranging from 140-235°C. From these determinations, a regression equation was derived which can be used to predict the level of branching over an even wider range of reactor temperatures. The result thus predicted is more accurate than a single experimental determination. The regression equation thus derived was used to determine the total number of branches per 1000 $CH_2$'s as they appear in the Tables. The equation is:

$$B = 7.363 + 0.0707T$$

where B = Total No. of Branches per 1000 $CH_2$'s

T = Reactor Temperature in °C

TABLE II

| Example No. | MAA % wt | nBA % wt | Reactor Temp. (°C) | % Neut. Calc. | MI[1] Ionomer | Ion Type | MF/FP[2] °C | Modulus @ 23°C[3] Kpsi | Ross Flex @ -20°C[4] (1/8") cycles to fail | Ross Flex @ -20°C[4] (1/4") cycles to fail | Tensiles[5] Break (psi) | Tensiles[5] % Elong |
|---|---|---|---|---|---|---|---|---|---|---|---|---|
| C-1 | 9.0 | 16.7 | 160 | 51 | 0.6 | Na | 87/69 | 12.7 | 1275 | 270 | 4.08 | 585 |
| 1 | 8.2 | 10.0 | 230 | 50 | 1.5 | Na | 88/70 | 12.5 | 1000 | 512 | 4.15 | 613 |

FOOTNOTES

(1) MI, Melt Index (dg/min.) was determined by ASTM D-1238.

(2) MF/FP are the crystalline melting and freezing points determined by differential scanning calorimetry.

(3) Modulus @23°C was determined by ASTM D-790-A.

(4) Ross Flex (pierced) at -20°C was determined by ASTM D-1052.

(5) Tensiles were determined by ASTM D-1708.

Example 3

Polymer base resins were produced at about 235°C and 186 MPa (27 kpsi) pressure. The base polymer compositions were: E/7.0 MAA/7.0nBA by weight (Ex. 3) and E/6.5 AA/7.7 nBA by weight (Ex. 2). The polymers were converted to ionomers following the general extrusion conditions detailed in Example 1. The polymer of Ex. 3 was converted to ionomer by reacting 1000 g of polymer with 24.72 g of sodium concentrate (Ex. 3A). In a separate batch, 1000 g of the polymer of Ex. 3 was reacted with 54.38 g of sodium concentrate (Ex. 3B). In a similar manner, 1000 g of the polymer of Ex. 2 was reacted with 27.58 g of sodium concentrate (Ex. 2A). In a separate batch, 1000 g of the polymer of Ex. 2 was reacted with 60.67 g of sodium concentrate (Ex. 2B).

Table V summarizes the composition and physical properties of these terionomers. The examples demonstrate that substitution of AA for MAA gives terionomers with unusally high abrasion resistance. These compositions were synthesized under identical reactor conditions, have nearly identical softening comonomer content and equivalent degrees of neutralization.

Example 4 and Comparative Examples 4A and 4B

Polymers were synthesized at 230°C reactor temperature and 27 kpsi pressure. One composition

TABLE III

| Example No. | Polymer Composition Weight % AA | MAA | nBA | Mole % AA | MAA | nBA(A) | (B)* | Total No. Branches Per 1000 $CH_2$'s | Branching Index C |
|---|---|---|---|---|---|---|---|---|---|
| 2 | 6.5 | - | 7.7 | 2.81 | - | 1.87 | 1.85 | 9.24 | 5.66 |
| C-2 | - | 8.6 | 14.5 | - | 3.38 | 3.83 | .789 | 3.95 | 5.45 |

*Assuming average molecular weight of branches = 84

TABLE IV

| Example No. | Polymer Composition Wt. % AA | MAA | nBA | Reactor Temp. °C | % Neut. (sodium) | Abrasion[(1)] (NBS) | Ross Flex @ -20°C (1/8") cycles to fail | Flex Modulus (kpsi) 23°C | °C | -20°C |
|---|---|---|---|---|---|---|---|---|---|---|
| 2A | 6.5 | - | 7.7 | 235 | 25 | 436 | 657 | 18 | 44 | 88 |
| 2B | 6.5 | - | 7.7 | 235 | 55 | 886 | 205 | 29 | 53 | 80 |
| C-2A | - | 8.6 | 14.5 | 160 | 35 | 132 | 270 | 18 | 42 | 73 |
| C-2B | - | 8.6 | 14.5 | 160 | 65 | 224 | 360 | 18 | 42 | 72 |

(1) Abrasion resistance, NBS Index was determined by ASTM D-1630.

0148632

TABLE V

| Example No. | Polymer Composition Wt. % AA | MAA | nBA | Reactor Temp. °C | % Neut. Na | MI Base Resin | MI Ionomer | Ross Flex @-20°C (1/8") cycles to fail | Flex Modulus(kpsi) 23°C | °C | -20°C | Abrasion NBS |
|---|---|---|---|---|---|---|---|---|---|---|---|---|
| 3A | - | 7.0 | 7.0 | 235 | 25 | 21.4 | 5.2 | 546 | 21 | 56 | 96 | 145 |
| 3B | - | 7.0 | 7.0 | 235 | 55 | 21.4 | 2.5 | 380 | 27 | 64 | 90 | 193 |
| 2A | 6.5 | - | 7.7 | 235 | 25 | 10.2 | 2.0 | 657 | 18 | 44 | 88 | 436 |
| 2B | 6.5 | - | 7.7 | 235 | 55 | 10.2 | 0.6 | 205 | 29 | 53 | 80 | 886 |

contained 12.3% of MAA, 4.8% of n-butylacrylate and 82.9% by weight of ethylene (Ex. 4). This polymer was converted to the sodium ionomer by combining 11.34 kg of the polymer with 745.3 g of sodium concentrate and extruding the blend according to the procedure described in Example 1. Another composition contained 12.0% of MAA, 5.1% of isobutylacrylate (iBA) and 82.9% by weight of ethylene (Ex. C-4). This polymer was converted to the sodium ionomer by combining 2.72 kg of the polymer with 185.0 g of sodium concentrate and extruding the blend as above (Ex. C-4A).

Table VI summarizes the composition and physical properties for terionomers containing different softening comonomers. A resin containing no softening comonomer, E/9.7% MAA neutralized 39% with sodium hydroxide, is included for comparison (Ex. C-4B). The data in Table VI show the large improvement in flex-crack resistance at low temperature achieved at surprisingly low levels of a softening comonomer (nBA) with $T_g < 233°K$. The use of the same low level of branched acrylate (isobutyl acrylate) with $T_g > 233°K$ shows no improvement in Ross Flex relative to the polymer without softening comonomer and equivalent flex modulus. This strong effect of nBA on low temperature properties such as flex-crack resistance allows preparation of terionomers having high modulus and improved low temperature properties. With low levels of softening comonomers, a novel balance of improved properties for terionomers is achieved (i) improved low temperature mechanical performance, (ii) high modulus (>25kpsi) and (iii) high abrasion resistance (>200 NBS index) relative to materials of similar modulus. This excellent balance of mechanical properties can

0148632

be achieved at high reactor temperatures, hence, excellent process economics.

TABLE VI

| Example No. | Polymer Composition, wt % MAA | nBA | iBA | Reactor Temp °C | % Neut Na | MI Ionomer | Modulus kpsi | Abrasion NBS | Tensiles Break (kpsi) | Tensiles % Elong | Ross Flex @-20°C (1/8") Cycles to Fail |
|---|---|---|---|---|---|---|---|---|---|---|---|
| 4 | 12.3 | 4.8 | - | 230 | 31 | 1.0 | 26.9 | 304 | 4.14 | 466 | 280 |
| C-4A | 12.0 | - | 5.1 | 230 | 39 | 2.3 | 34.0 | 314 | 4.64 | 491 | 84 |
| C-4B | 9.7 | - | - | 250 | 39 | 2.6 | 28.9 | 179 | 3.65 | 472 | 87 |

Example 5 and Comparative Example 5

Polymers were synthesized at 230°C reactor temperature and 27 kpsi (186 MPa) pressure. One polymer (Ex. C-5) containing 6.1% of MAA, 8.7% of iBA and 85.2% by weight of ethylene was converted to ionomer by combining 4.54 kg of polymer with 157.5 g of sodium concentrate, and extruding the blend as described in Example 1. Another polymer (Ex. 5) containing 6.2% of MAA, 9.7% of nBA and 84.1% by weight of ethylene was converted to ionomer by combining 8.38 kg of polymer with 301.6 g of sodium concentrate and extruding the blend as above.

Table VII summarizes the composition and physical properties of these terionomers. There is close equivalence of all mechanical properties for these terionomers except for the low temperature Ross Flex. The terionomer containing the linear acrylate, nBA, with a $T_g < 233°K$ shows nearly an order-of-magnitude improvement in low temperature Ross Flex relative to the polymer containing the branched acrylate, iBA, with $T_g > 233°K$.

Example 6 and Comparative Example 6

A polymer (Ex. C-6) was synthesized at 160°C reactor temperature and 27 kpsi (186 MPa) pressure that contained 6.3% of MAA, 11.4% of nBA and 82.3% by weight of ethylene. The polymer was converted to ionomer by combining 2.27 kg of polymer with 87.4 g of sodium concentrate and extruding the blend as described in Example 1.

Another polymer (Ex. 6) was synthesized at 230°C reactor temperature and 27 kpsi (186 MPa) pressure that contained 6.7% of MAA, 10.6% of nBA and 82.7% by weight of ethylene. The polymer was converted to ionomer by combining 1000 g of polymer with 52.4g of sodium concentrate and extruding the blend as above.

TABLE VII

| Example No. | Polymer Composition, wt % MAA | nBA | iBA | Reactor Temp. °C | % Neut. Na | MI Base Resin | MI Ionomer | Modulus kpsi | Tensiles break (kpsi) | % Elong | Abrasion (NBS) | Tear Str. kN/cm | Ross Flex @ -20°C (1/8") cycles to fail |
|---|---|---|---|---|---|---|---|---|---|---|---|---|---|
| C-5 | 6.1 | - | 8.7 | 230 | 35 | 19.8 | 4.0 | 11.7 | 3.30 | 646 | 103 | 0.68 | 335 |
| 5 | 6.2 | 9.7 | - | 230 | 38 | 12.0 | 1.4 | 10.4 | 3.32 | 696 | 145 | 0.64 | 2345 |

(1) Tear Strength was determined by DIN-53515

TABLE VIII

| Example No. | Polymer Comptn. wt. % | | Reactor Temp. °C | % Neut. Na | MI Base Resin | MI Ionomer | Modulus kpsi | Tensiles | | Ross Flex @ -20°C (1/8") cycles to fail |
|---|---|---|---|---|---|---|---|---|---|---|
| | MAA | nBA | | | | | | break (kpsi) | % Elong | |
| C-6 | 6.3 | 11.4 | 160 | 22 | 19.7 | 5.9 | 11.4 | 3.30 | 680 | 1525 |
| 6 | 6.7 | 10.6 | 230 | 55 | 16.2 | 1.0 | 11.4 | 3.59 | 632 | 2625 |

Table VIII summarizes the composition and physical properties of these terionomers. Despite the large difference in the reactor temperatures used to synthesize these polymers, these terionomers have nearly equivalent physical properties. In fact, the polymer synthesized at higher reactor temperature has better Ross Flex than the one produced at lower reactor temperaure. This result is surprising in view of the teaching of copending patent application No. 83307918.9 to the effect that polymer synthesized at lower reactor temperature should have better Ross Flex. The "summation rule" does not directly apply to this example because it requires all compositional variables to remain constant except for the mole % of softening comonomer and chain branches. In this example, the degree of neutralization is different between the two ionomers. At equivalent degrees of neutralization the low temperature mechanical properties would be quite different.

CLAIMS:

1. Improved low temperature flex-crack resistant ionic copolymer of ethylene, unsaturated carboxylic acid and at least one softening comonomer, said softening comonomer being capable of forming a homopolymer that has a glass transition temperature of less than -40°C, said ionic copolymer of ethylene being characterized by having chain branches arising from the polymerization of ethylene, said branches being composed of butyl or longer branches, the unsaturated carboxylic acid is selected from the group consisting of α,ß-ethylenically unsaturated mono- and dicarboxylic acids of 3-8 carbon atoms, half esters of said dicarboxylic acids and anhydrides of said dicarboxylic acids, said copolymer containing from about 70 to about 98.7 mole % of ethylene, from about 0.35 to about 12 mole % of unsaturated carboxylic acid, from about 0.45 to about 12 mole % of softening comonomer, and from about 0.5 to about 6 mole % of chain branches arising from the polymerization of ethylene, said branches being composed of butyl or longer branches, said ionic copolymer of ethylene being characterized by having from about 5 to about 20 chain branches arising from the polymerization of ethylene,/1000 $CH_2$ units of the polymer backbone and said copolymer being further characterized by satisfying the equation A + 2.05B = C, wherein A is the mole % of softening comonomer, B is the mole % of butyl or longer chain branches arising from the polymerization of ethylene and C is from about 1.5 to about 24.3, said ionic copolymer of ethylene having from about 3 to about 90% of the carboxylic acid groups ionized by neutralization with metal ion selected from groups Ia, Ib, IIa, IIb, IIIa, IVa, VIb and VIII of the Periodic Table of

Elements, said ionic copolymer of ethylene optionally containing from 0 to about 10 wt. % of mold release or slip agent selected from the group consisting of compounds having the following formulae:

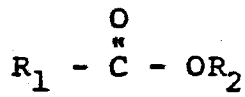 ; 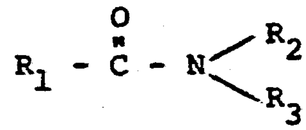 ;

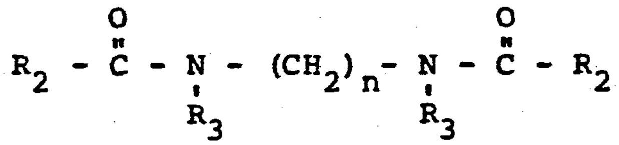 bis amide ;

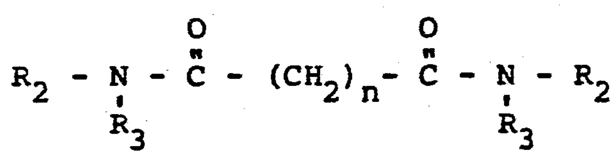 di amide ;

where: $R_1$ = 3-24 carbon alkyl group
$R_2$ = 1-24 carbon alkyl group or H
$R_3$ = 1-4 carbon alkyl group or H
n = 2-8

2. The ionic copolymer of Claim 1 wherein said softening comonomer is selected from the group consisting of alkyl esters of acrylic acid and alkyl vinyl ethers, vinyl esters and vinyl siloxanes.

3. The ionomer of Claim 2 wherein said softening comonomer is selected from the group consisting of alkyl esters of acrylic acid and alkyl vinyl ethers wherein the alkyl group of said acrylic acid ester is selected from the group consisting of n-butyl, n-hexyl, n-heptyl, n-octyl, 2-octyl, 2-ethylbutyl, 2-ethylhexyl, 2-ethoxyethyl, 4-thiapentyl, 2-ethoxypropyl, 3-methylbutyl, 2-methoxyethyl, 3-methoxypropyl and 3-methoxybutyl and the alkyl group of said vinyl ether is selected from the group consisting of ethyl, n-propyl, n-butyl, 2-ethylhexyl, n-hexyl n-pentyl, and n-octyl, and said unsaturated carboxylic acid is selected from

the group consisting of acrylic acid, methacrylic acid, maleic acid, fumaric acid, itaconic acid and half esters of maleic, fumaric and itaconic acids.

4. The ionomer of Claim 1, 2 or 3 wherein the ionomer is direct copolymer, said unsaturated carboxylic acid is selected from the group consisting of acrylic acid and methacrylic acid, said softening comonomer has a glass transition temperature of less than -45°C and is selected from the group consisting of alkyl esters of acrylic acid and alkyl vinyl ethers, said alkyl ester is selected from the group consisting of 2-ethoxyethyl, 2-ethylbutyl, 2-methoxyethyl, 3-ethoxypropyl, 3-methoxybutyl, 4-thiapentyl, 3-methoxypropyl, n-butyl, n-hexyl, n-heptyl and n-octyl acrylate and said alkyl vinyl ether is selected from the group consisting of n-propyl, n-butyl, 2-ethylhexyl, n-hexyl, n-octyl and n-pentyl vinyl ether.

5. The ionomer of Claim 1, 2, 3 or 4 wherein said ethylene is present in an amount of from about 77 to about 97.5 mole %, said unsaturated carboxylic acid is present in an amount of from about 1 to about 9.5 mole %, said softening comonomer is present in an amount of from about 0.75 to about 9.0 mole % and the amount of chain branches arising from the polymerization of ethylene being from about from about 0.75 to about 4.5 mole % and wherein C in the equation is from about 2.3 to about 18.2, said ionic copolymer of ethylene having from about 5 to about 80% of the carboxylic acid groups ionized by neutralization with metal ion, and acid copolymer of ethylene being characterized by having from about 6 to about 16 chain branches arising from the polymerization of ethylene/1000 $CH_2$ units of the polymer backbone.

6. The ionomer of any one of Claims 1 to 5 wherein said ethylene is present in an amount of from about 81 to about 95.8 mole %, said unsaturated carboxylic acid is present in an amount of from about 2.0 to about 9.0 mole %, said softening comonomer has a glass transition temperature of less than -50°C, is selected from the group consisting of alkyl esters of acrylic acid and alkyl vinyl ethers, said alkyl ester is selected from the group consisting of n-butyl, 3-ethoxypropyl, n-hexyl, n-heptyl, n-octyl, 3-methoxybutyl, 3-methoxypropyl, and 4-thiapentyl acrylate, and said methyl vinyl ether is selected from the group consisting of n-butyl, n-hexyl, n-octyl, and n-pentylvinyl ether, said softening comonomer is present in an amount of from about 1.2 to about 7 mole %, and said ionic copolymer of ethylene having from about 1 to about 3.0 mole % of chain branches arising from the polymerization of ethylene, and C in the equation is from about 3.2 to about 13.2, said ionic copolymer of ethylene having from about 20 to about 70% of the carboxylic acid groups ionized by neutralization with metal ion selected from the group consisting of sodium, potassium, zinc, calcium, magnesium, aluminum, and chromium, and said ionic copolymer of ethylene being characterized by having from about 7 to about 12 chain branches arising from the polymerization of ethylene/1000 $CH_2$ units of the polymer backbone.

7. Improved abrasion resistant ionic copolymer of ethylene of any one of Claims 1 to 6 wherein said unsaturated carboxylic acid is acrylic acid.

8. The ionomer of Claims 1, 2, 3, 5, 6 or 7 wherein the ionomer is a graft copolymer.

9. An improved process of preparing ionic copolymers of ethylene having improved low

temperature flex-crack resistance, said process being selected from the group consisting of direct copolymerization and graft copolymerization wherein

(A) said direct copolymerization comprises polymerizing ethylene, unsaturated carboxylic acid and at least one comonomer in the presence of free radical polymerization initiator at elevated temperatures followed by neutralization of the carboxylic acid groups of the resultant direct copolymer with metal ions, and

(B) said graft copolymerization comprises polymerizing ethylene and at least one comonomer in the presence of free radical polymerization initiator at elevated temperatures and grafting unsaturated carboxylic acid or anhydride onto the ethylene/comonomer polymer backbone followed by neutralization of the carboxylic acid groups of the resultant graft copolymer with metal ions,

the improvement comprising selecting said comonomer from the group consisting of softening comonomers that are characterized by being copolymerizable with ethylene and being capable of forming a homopolymer that has a glass transition temperature of less than -40°C, and selecting the unsaturated acid from the group consisting of α,ß-ethylenically unsaturated, mono- and dicarboxylic acids of 3-8 carbon atoms, half esters of said dicarboxylic acids and anhydrides of said dicarboxylic acids, said copolymer containing from about 70 to about 98.7 mole % of ethylene, from about 0.35 to about 12 mole % of unsaturated carboxylic acid, from about 0.45 to about 12 mole % of softening comonomer and from about 0.5 to about 6.0 mole % of chain branches arising from the polymerization of ethylene, said branches being composed of butyl or

longer branches, the polymerization temperature being from about 205 to about 300°C, adjusting the amount of softening comonomer and the polymerization temperature to satisfy the equation A+2.05B = C, wherein A is the mole % of softening comonomer, B is the mole % of butyl or longer chain branches arising from the polymerization of ethylene and C is from about 1.5 to about 24.3, and to further satisfy the requirement that the chain branches arising from the polymerization of ethylene is present in an amount of from about 5 to about 20 chain branches/1000 $CH_2$ units of the polymer backbone from about 3 to about 90% of the carboxylic acid groups of the copolymer being neutralized with metal ions selected from groups Ia, Ib, IIa, IIb, IIIa, IVa, VIb and VIII of the Periodic Table.

10. The process of Claim 9 wherein said softening comonomer is selected from the group consisting of alkyl esters of acrylic acid, alkyl vinyl ethers, alkyl vinyl esters and vinyl siloxanes.

11. The process of Claim 10 wherein said softening comonomer is selected from the group consisting of alkyl esters of acrylic acid and alkyl vinyl ethers, said alkyl ester is selected from the group consisting of n-butyl, n-hexyl, n-heptyl, n-octyl, 2-octyl, 2-ethylbutyl, 2-ethylhexyl, 4-thiapentyl, 2-ethoxyethyl, 2-ethoxypropyl, 3-methylbutyl, 2-methoxyethyl, 3-methoxypropyl, and 3-methoxybutyl acrylate, and said alkyl vinyl ether is selected from the group consisting of ethyl, n-propyl, n-butyl, 2-ethylhexyl, n-hexyl, n-pentyl, n-octyl vinyl ether, and said unsaturated carboxylic acid is selected from the group consisting of acrylic acid, methacrylic acid, maleic acid, fumaric acid, itaconic acid and half esters of maleic, fumaric and itaconic acids.

12. The improved process of Claim 9, 10 or/11 wherein the process is direct copolymerization, said unsaturated carboxylic acid is selected from the group consisting of acrylic acid and methacrylic acid, said softening comonomer has a glass transition temperature of less than -45°C and is selected from the group consisting of alkyl esters of acrylic acid and alkyl vinyl ethers and said alkyl ester is selected from the group consisting of 2-ethoxyethyl, 2-ethylbutyl, 2-methoxyethyl, 3-ethoxypropyl, 4-thiapentyl, 3-methoxybutyl, 3-methoxypropyl, n-butyl, n-hexyl n-heptyl and n-octylacrylate, and said alkyl vinyl ether is selected from the group consisting of n-propyl, n-butyl, 2-ethylhexyl, n-hexyl, n-octyl, and n-pentyl vinyl ether.

13. The improved process of any one of/Claims 9 to 12 wherein said ethylene is present in an amount of from about 77 to about 97.5 mole %, said unsaturated carboxylic acid is present in an amount of from about 1 to about 9.5 mole %, said softening comonomer is present in an amount of from about 0.75 to about 9.0 mole %, said ionic copolymer of ethylene having from about 0.75 to about 4.5 mole % of chain branches arising from the polymerization of ethylene, and C in the equation is from about 2.3 to about 18.2, the polymerization temperature being from about 215 to about 270°C said ionic copolymer of ethylene being characterized by having from about 6 to about 16 chain branches arising from the polymerization of ethylene/1000 $CH_2$ units of the polymer backbone, said ionic copolymer of ethylene having from about 5 to about 80% of the carboxylic acid groups ionized by neutralization with metal ion.

14. The improved process of any one of/Claims 9 to 14 wherein said ethylene is present in an amount of from

about 81 to about 95.8 mole %, said unsaturated carboxylic acid is present in an amount of from about 2.0 to about 9.0 mole %, said softening comonomer has a glass transition temperature of less than -50°C, is selected from the group consisting of alkyl esters of acrylic acid and alkyl vinyl ethers, said alkyl ester is selected from the group consisting of n-butyl, 3-ethoxypropyl, n-hexyl, n-heptyl, n-octyl, 3-methoxypropyl and 4-thiapentyl acrylate, and said alkyl vinyl ether is selected from the group consisting of n-butyl, n-hexyl, n-octyl, and n-pentyl vinyl ether, said softening comonomer is present in an amount of from about 1.2 to about 7 mole %, said ionic copolymer of ethylene having from about 1 to about 3.0 mole % of chain branches arising from the polymerization of ethylene, and C in the equation is from about 3.2 to about 13.2, said ionic copolymer of ethylene being characterized by having from about 7 to about 12 chain branches arising from the polymerization of ethylene/1000 $CH_2$ units of the polymer backbone said ionic copolymer of ethylene having from about 20 to about 70% of the carboxylic acid groups ionized by neutralization with metal ion selected from the group consisting of sodium, potassium, zinc, calcium, magnesium, aluminum, and chromium and the polymerization temperature is from about 225 to about 255°C.

15. The improved process of any one of Claims 9 to 14 for the preparation of highly abrasion resistant ionic copolymer of ethylene, wherein said unsaturated carboxylic acid is acrylic acid.

16. The improved process of Claim 9, 10, 11, 13, 14 or 15 wherein the process is graft copolymerization.

17. A thermoplastic blend of at least one material selected from the group consisting of nylon, polypropylene, propylene-ethylene copolymer, linear polyethylene, and ethylene/unsaturated carboxylic acid copolymer with the improved low temperature flex-crack resistant ionic copolymer of any one of Claims 1 to 8.

18. A golf ball having similar click and feel as a golf ball made with balata cover comprising a core and a cover, wherein said cover comprises the ionic copolymer of any one of Claims 1 to 8.

19. A ski boot containing the ionic copolymer of any one of Claims 1 to 8.